# EUROPEAN PATENT APPLICATION

(11) **EP 4 503 748 A1**
(43) Date of publication of application: **05.02.2025**
(21) Application number: 22932681.4
(22) Date of filing: 24.03.2022
(51) Int. Cl.: H04W 48/02, H04W 48/16

(54) **ACCESS CONTROL METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN); ZHANG, Juan, Beijing 100085 (CN)
(74) Representative: Stöckeler, Ferdinand
(86) International application number: PCT/CN2022/082837
(87) International publication number: WO 2023/178616

(57) **Abstract**

Embodiments of the present disclosure provide an access control method. The method is executed by an access network device. The method comprises: sending indication information to a terminal, the indication information being used for indicating whether all first-type terminals are allowed to access a network, or the indication information being used for indicating whether some first-type terminals are allowed to access a network. In the embodiments of the present disclosure, upon comparison with the situation that whether a first-type terminal can access a network cannot be clearly determined, the reliability of the first-type terminal accessing the network can be improved.

## Description

### TECHNICAL FIELD

The present disclosure relates to, but is not limited to the technical field of wireless communications, and in particular to an access control method and apparatus, communication device, and storage medium.

### BACKGROUND

To support networking services, two technologies of Machine-Type Communications (MTC) and Narrow Band Internet of Things (NB-IoT) are proposed. These two techniques are mainly aimed at low-rate and high-latency scenarios. For example, these may include scenarios such as meter reading and environmental monitoring. NB-IoT can support up to several hundred kbps (kilobyte per second) rates and MTC can support up to several Mbps (megabyte per second) rates. However, with the continuous development of Internet of Things services, such as video monitoring, smart home, wearable devices and industrial sensor monitoring services are popular. These services usually require rates of several tens to 100 M and have relatively high requirements for delay, so that MTC and NB-IoT techniques are difficult to meet.

In a new radio technology, new terminals are introduced to meet the requirements of mid-end Internet of Things equipment. Such terminals are called reduced capability (Redcap) or NR-lite for short. After the introduction of RedCap user equipment, how to realize the access control of RedCap user equipment is a problem to be considered.

### SUMMARY

Embodiments of the present disclosure disclose an access control method and apparatus, communication device and storage medium.

According to a first aspect of embodiments of the present disclosure, an access control method is provided, where the method is performed by an access network device, and the method includes: sending indication information to a terminal, where the indication information indicates whether all first-type terminals are allowed to access a network, or the indication information indicates whether some first-type terminals are allowed to access a network.

In an embodiment, the indication information further indicates whether the first-type terminals having a predetermined feature are allowed to access a network. The predetermined feature includes at least one of: a number of Rx branches; a structure of an antenna; a number of multiple-input multiple-output (MIMO) layers supportable at most; and a transmission power level.

In an embodiment, the information field of the indication information includes a first indication field and a second indication field;
the first-type terminals and/or the access network device operate in a first frequency range (FR1), the first indication field indicates the first-type terminals having a first number of Rx branches are allowed or not allowed to access a network, and the second indication field indicates the first-type terminals having a second number of Rx branches are allowed or not allowed to access a network; or
the first-type terminals and/or the access network device operate in a second frequency range (FR2), where the first indication field indicates whether the first-type terminals having a first antenna structure are allowed to access a network, and the second indication field indicates whether the first-type terminals having a second antenna structure are allowed to access a network; or
the first-type terminals and/or the access network device operate in a second frequency range (FR2), where the first indication field indicates whether the first-type terminals supporting a first number of MIMO layers at most are allowed to access a network, and the second indication field indicates whether the first-type terminals supporting a second number of MIMO layers at most are allowed to access a network; or
the first-type terminals and/or the access network device operate in a second frequency range (FR2), the first indication field indicates whether the first-type terminals supporting a first transmission power level are allowed to access a network, and the second indication field indicates whether the first-type terminals supporting a second transmission power level are allowed to access a network.

In an embodiment, the first-type terminals and/or the access network device operate in a second frequency range (FR2); and the information field of the indication information indicates whether all first-type terminals are allowed to access a network.

In an embodiment, the first transmission power level includes a first power level element and the second transmission power level includes a second power level element, and the transmission power corresponding to the second power level element is less than the transmission power corresponding to the first power level element.

In an embodiment, the first-type terminals supporting the first transmission power level have a first antenna structure and/or the first-type terminals supporting the second transmission power level have a second antenna structure.

In an embodiment, the first antenna structure includes the same number of antenna elements as that of an antenna of a second-type terminal and/or the second antenna structure includes a smaller number of antenna elements than that of an antenna of a second-type terminal.

In an embodiment, the first-type terminal is a reduced capability (RedCap) user equipment.

According to a second aspect of embodiments of the present disclosure, an access control method is provided, where the method is performed by a first-type terminal, the method including: receiving indication information sent by an access network device, where the indication information indicates whether all first-type terminals are allowed to access a network, or the indication information indicates whether some first-type terminals are allowed to access a network.

In an embodiment, the indication information further indicates whether the first-type terminals having a predetermined feature are allowed to access a network. The predetermined feature includes at least one of: a number of Rx branches; a structure of an antenna; a number of multiple-input multiple-output (MIMO) layers supportable at most; and a transmission power level.

In an embodiment, the method further includes: determining whether to access a network according to the indication information and a feature of the first-type terminal.

In an embodiment, determining whether to access a network according to the indication information and a feature of the first-type terminal includes: determining whether the first-type terminal is a terminal having the predetermined feature according to the indication information and a feature of the first-type terminal; determining that the indication information indicates that the first-type terminals having a predetermined feature are allowed to access a network, determining that the first-type terminal is a terminal having the predetermined feature, and determining to access a network; or
determining that the indication information indicates that the first-type terminals having a predetermined feature are allowed to access a network, determining that the first-type terminal is not a terminal having the predetermined feature, and determining not to access a network; or
determining that the indication information indicates that the first-type terminals having a predetermined feature are not allowed to access a network, and determining that the first-type terminal is a terminal having the predetermined feature, and determining not to access a network; or
determining that the indication information indicates that the first-type terminals having a predetermined feature are not allowed to access a network, determining that the first-type terminal is not a terminal having the predetermined feature, and determining to access a network.

In an embodiment, the information field of the indication information includes a first indication field and a second indication field;
the first-type terminals and/or the access network device operate in a first frequency range (FR1), the first indication field indicates whether the first-type terminals having a first number of Rx branches are allowed to access a network, and the second indication field indicates whether the first-type terminals having a second number of Rx branches are allowed to access a network; or
the first-type terminals and/or the access network device operate in a second frequency range (FR2), where an information field of the indication information includes a first indication field and a second indication field; and the first indication field indicates whether the first-type terminals having a first antenna structure are allowed to access a network; and the second indication field indicates whether the first-type terminals having a second antenna structure are allowed to access a network; or
the first-type terminals and/or the access network device operate in a second frequency range (FR2); the information field of the indication information includes a first indication field and a second indication field; the first indication field indicates whether the first-type terminals supporting a first number of multiple-input multiple-output (MIMO) layers at most are allowed to access a network; and the second indication field indicates whether the first-type terminals supporting a second number of MIMO layers at most are allowed to access a network; or
the first-type terminals and/or the access network device operate in a second frequency range (FR2); the information field of the indication information includes a first indication field and a second indication field; the first indication field indicates whether the first-type terminals supporting a first transmission power level are allowed to access a network; and the second indication field indicates whether the first-type terminals supporting the second transmission power level are allowed to access a network.

In an embodiment, the first-type terminals and/or the access network device operate in a second frequency range (FR2); and the information field of the indication information indicates all first-type terminals are allowed or not allowed to access a network.

In an embodiment, the first transmission power level includes a first power level element and the second transmission power level includes a second power level element, and the transmission power corresponding to the second power level element is less than the transmission power corresponding to the first power level element.

In an embodiment, the first-type terminals supporting the first transmission power level have a first antenna structure and/or the first-type terminals supporting the second transmission power level have a second antenna structure.

In an embodiment, the first antenna structure includes the same number of antenna elements as that of an antenna of a second-type terminal and/or the second antenna structure includes a smaller number of antenna elements than that of an antenna of a second-type terminal.

In an embodiment, the first-type terminal is a RedCap user equipment.

According to a third aspect of embodiments of the present disclosure, an access control apparatus is provided, where the apparatus includes: a sending module configured to send indication information to a terminal, where the indication information indicates whether all first-type terminals are allowed to access a network, or the indication information indicates whether some first-type terminals are allowed to access a network.

According to a fourth aspect of embodiments of the present disclosure, an access control apparatus is provided, where the apparatus includes: a receiving module configured to receive indication information sent by an access network device, where the indication information indicates whether all first-type terminals are allowed to access a network, or the indication information indicates whether some first-type terminals are allowed to access a network.

According to a fifth aspect of embodiments of the present disclosure, a communication device is provided, which includes: a processor; and a memory for storing the processor-executable instructions. The processor is configured to implement the method of any one of embodiments of the present disclosure when the executable instructions are executed.

According to a sixth aspect of the embodiments of the present disclosure, a computer storage medium is provided. The computer storage medium has stored therein computer executable instructions which, when executed by a processor, cause the method of any one of embodiments of the present disclosure to be performed.

In an embodiment of the present disclosure, the indication information is sent to a terminal, where the indication information indicates whether all first-type terminals are allowed to access a network, or the indication information indicates whether some first-type terminals are allowed to access a network. As such, since the indication information sent by the access network device to the terminal indicates: whether all first-type terminals are allowed to access a network, or whether some first-type terminals are allowed to access a network. After the terminal receives the indication information, it can be determined whether to access a network according to the indication of the indication information, and the reliability of the first-type terminal accessing the network can be improved compared to when the first-type terminal can access a network cannot be clearly determined.

### BRIEF DESCRIPTION OF THE DRAWINGS

FIG. 1 is a schematic structural diagram showing a wireless communication system according to an example embodiment.
FIG. 2 is a schematic flowchart showing an access control method according to an example embodiment.
FIG. 3 is a schematic flowchart showing an access control method according to an example embodiment.
FIG. 4 is a schematic flowchart showing an access control method according to an example embodiment.
FIG. 5 is a schematic flowchart showing an access control method according to an example embodiment.
FIG. 6 is a schematic flowchart showing an access control method according to an example embodiment.
FIG. 7 is a schematic flowchart showing an access control method according to an example embodiment.
FIG. 8 is a schematic flowchart showing an access control method according to an example embodiment.
FIG. 9 is a schematic flowchart showing an access control method according to an example embodiment.
FIG. 10 is a schematic flowchart showing an access control method according to an example embodiment.
FIG. 11 is a schematic flowchart showing an access control method according to an example embodiment.
FIG. 12 is a schematic flowchart showing an access control method according to an example embodiment.
FIG. 13 is a schematic flowchart showing an access control method according to an example embodiment.
FIG. 14 is a schematic flowchart showing an access control method according to an example embodiment.
FIG. 15 is a schematic structural diagram showing an access control apparatus according to an example embodiment.
FIG. 16 is a schematic structural diagram showing an access control apparatus according to an example embodiment.
FIG. 17 is a schematic structural diagram showing a terminal according to an example embodiment.
FIG. 18 is a block diagram showing a base station according to an example embodiment.

### DETAILED DESCRIPTION

Reference will now be made in detail to example embodiments, examples of which are illustrated in the accompanying drawings. Where the following description refers to the accompanying drawings, like numbers in different drawings indicate the same or similar elements, unless otherwise indicated. The example embodiments described in the following illustrative examples do not represent all embodiments consistent with embodiments of the present disclosure. Rather, they are merely examples of apparatus and methods consistent with certain aspects of the disclosed embodiments as detailed in the appended claims.

The terminology used in the embodiments of the disclosure is for the purpose of describing particular embodiments only and is not intended to be limited to the embodiments of the disclosure. As used in the embodiments of the disclosure and the appended claims, the singular forms "a", "an", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms the first, the second, third, etc. may be used in describing various information in embodiments of the present disclosure, such information should not be limited to these terms. These terms are only used to distinguish one type of information from another. For example, the first information may also be referred to as the second information, and similarly, the second information may also be referred to as the first information, without departing from the scope of embodiments of the present disclosure. Depending on the context, the word "if' as used herein may be interpreted as "at", "when" or "in response to determining".

For purposes of brevity and ease of understanding, the terms "greater than" or "less than" are used herein when characterizing size relationships. However, for a person skilled in the art, it can be understood that the term "greater than" also encompasses the meaning of "greater than or equal to" "less than" also encompasses the meaning of "less than equal to".

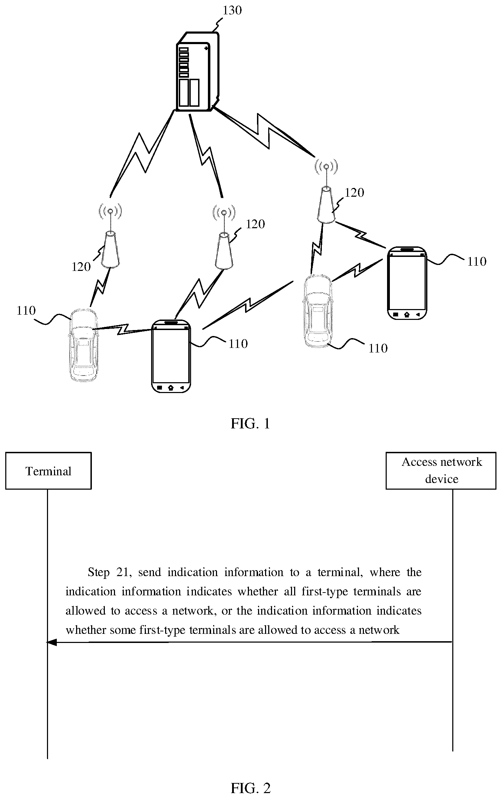

Referring to FIG. 1, a structural diagram of a wireless communication system provided by an embodiment of the present disclosure is shown. As shown in FIG. 1, the wireless communication system is a communication system based on mobile communication technology, and the wireless communication system may comprise: several user equipment 110 and several base stations 120.

User equipment 110 may be, among other things, a device that provides voice and/or data connectivity to a user. The user equipment 110 may communicate with one or more core networks via a Radio Access Network (RAN), and the user equipment 110 may be an Internet of Things user equipment, such as a sensor device, a mobile phone, and a computer having the Internet of Things user equipment, and may be, for example, a fixed, portable, pocket, hand-held, computer-built or vehicle-mounted apparatus. For example, a Station (STA), subscriber unit, subscriber station, mobile station, mobile, remote station, access point, remote terminal, access terminal, user terminal, user agent, user equipment, or user equipment. Alternatively, the user equipment 110 may be a device of an unmanned aerial vehicle. Alternatively, the user equipment 110 may be an on-board device, such as a driving computer with wireless communication capability, or a wireless user equipment connected to the driving computer. Alternatively, the user equipment 110 may be a roadside device, such as a street light, signal light, or other roadside device having wireless communication capabilities.

Base station 120 may be network side equipment in a wireless communication system. Wherein the wireless communication system can be the 4th generation mobile communication (4G) system, also known as a long-term evolution (LTE) system; alternatively, the wireless communication system may be a 5G system, also known as a new air interface system or a 5G NR system. Alternatively, the wireless communication system may be a further generation of the 5G system. Among others, the access network in the 5G system may be referred to as NG-RAN (New Generation-Radio Access Network).

The base station 120 may be an evolved base station (eNB) used in a 4G system. Alternatively, base station 120 may be a gNB in a 5G system using a centralized distributed architecture. When the base station 120 employs a centralized architecture, it typically includes a centralized central unit (CU) and at least two distributed units (DU). A protocol stack of a packet data convergence protocol (PDCP) layer, a radio link control protocol (RLC) layer, and a media access control (MAC) layer is provided in the concentration unit; the distribution unit is provided with a Physical (PHY) layer protocol stack, and embodiments of the present disclosure do not limit the specific implementation of the base station 120.

A wireless connection may be established between the base station 120 and the user equipment 110 over a wireless air interface. In different embodiments, the wireless air interface is a wireless air interface based on a fourth generation mobile communication network technology (4G) standard; alternatively, the wireless air interface is a wireless air interface based on a fifth generation mobile communication network technology (5G) standard, for example, the wireless air interface is a new air interface; alternatively, the wireless air interface may be a wireless air interface based on 5G's next generation mobile communication network technology standard.

In some embodiments, an E2E (End to End) connection may also be established between user equipment 110; scenarios such as V2V (vehicle to vehicle) communication, V2I (vehicle to Infrastructure device) communication, and V2P (vehicle to pedestrian) communication in vehicle to everything (V2X).

Here, the user equipment described above may be regarded as the terminal device of the following embodiments.

In some embodiments, the wireless communication system may further include network management equipment 130.

Several base stations 120 are respectively connected to network management equipment 130. The network management equipment 130 may be a core network device in a wireless communication system, for example, the network management equipment 130 may be a mobility management entity (MME) in an evolved packet core network (EPC). Alternatively, the network management equipment may be another core network device, such as a Serving GateWay (SGW), a Public Data Network GateWay (PGW), a policy and charging rules function (PCRF), or a home subscriber server (HSS), etc. Embodiments of the present disclosure are not limited to the implementation form of the network management equipment 130.

In order to facilitate the understanding of those skilled in the art, the disclosed examples set forth a plurality of embodiments to clearly illustrate embodiments of the present disclosure. Of course, those skilled in the art will appreciate that embodiments of the present disclosure provide a plurality of embodiments that can be implemented separately, can also be executed in combination with the methods of other embodiments in embodiments of the present disclosure, and can also be executed alone or in combination with some methods of other related art; the embodiments of this disclosure are not intended to be limiting.

In order to better understand the technical solution described in any of embodiments of the present disclosure, firstly, an application scenario in the related art is described.

In the fourth-generation mobile communication network system 4G of the long-term evolution LTE network, to support networking services, two technologies of Machine Type Communication (MTC) and Narrow Band Internet of Things (NB-IoT) are proposed. These two techniques are mainly aimed at low-rate and high-latency scenarios. For example, scenarios such as meter reading and environmental monitoring. In the related art, NB-IoT can support up to several hundred k rates, and MTC can currently support up to several M rates. On the other hand, however, with the continuous development of Internet of Things services, such as video monitoring, smart home, wearable devices, and industrial sensor monitoring services have become popular. These services typically require rates of tens to 100 M, with relatively high requirements for delay. Therefore, the MTC and NB-IoT techniques in LTE are difficult to meet. On this basis, the requirement of redesigning a new user equipment in the 5G new radio to cover the Internet of Things equipment is proposed. This new terminal type is called reduced capability user equipment UE or NR-lite for short.

Like the Internet of Things devices in LTE, 5G NR-lite generally needs to meet the following requirements: 1. low cost and low complexity; 2. a certain degree of coverage enhancement; 3. power savings.

Since the NR new radio is designed for high-end terminals with high rate and low delay, the related design cannot meet the above requirements of NR-lite. Therefore, the NR system needs to be modified to meet the requirements of NR-lite. For example, to meet the requirements of low cost and low complexity, the RF bandwidth of NR-IoT can be limited, for example to 5 MHz or 10 MHz; or the size of the buffer of the NR-lite is limited, thereby limiting the size of each received transmission block, etc.

In an embodiment, to allow the network flexibility to control which RedCap user equipment is allowed to access, access control is supported for different reception antenna branches (Rx branches for short). Considering that RedCap supports 1 and 2 Rx branches, respectively, 2 access control bits are introduced in the system message to indicate whether RedCap user equipment with the number of 1 and 2 Rx branches is allowed, respectively.

In an embodiment, the RedCap user equipment supports 1 and 2 Rx branches under FR1, respectively. However, a different antenna structure is provided under FR2. Illustratively, the terminals have the same number of Rx branches under FR2, but different antenna elements for a certain Rx branch. The previous access control mechanism with different Rx branches is then no longer applicable under FR2.

As shown in FIG. 2, an access control method is provided in embodiments of the present disclosure, where the method is performed by an access network device, and the method includes:
Step 21, send indication information to a terminal, where the indication information indicates whether all first-type terminals are allowed to access a network, or the indication information indicates whether some first-type terminals are allowed to access a network.

Here, the first-type terminals to which the present disclosure relates may be, but are not limited to, a mobile phone, a wearable device, a vehicle-mounted terminal, a Road Side Unit (RSU), a smart home terminal, an industrial sensing device and/or a medical device, etc. In some embodiments, the first-type terminal may be a RedCap user equipment or a predetermined version of a new radio NR terminal (e.g., an NR terminal of R17). The second-type terminals referred to in the present disclosure may be terminals of R15 and R16.

The access network device referred to in the present disclosure may be a base station. Here, the base station may be various types of base stations, for example, a base station of a third-generation mobile communication (3G) network, a base station of a fourth-generation mobile communication (4G) network, a base station of a fifth-generation mobile communication (5G) network, or other evolved type base stations.

In an embodiment, the first-type terminal may be provided with a different number of Rx branches. Illustratively, the first-type terminal may be provided with 1 or 2 Rx branches.

In an embodiment, the Rx branches of the first-type terminals may be provided with a different number of antenna elements. Illustratively, the Rx branches of the first-type terminals may be provided with 3 or 4 antenna elements.

It should be noted that some first-type terminals may be those having the same number of Rx branches among all first-type terminals. Some first-type terminals may also be first-type terminals all having the same Rx branches and the same number of antenna elements of the Rx branches.

In an embodiment, indication information is sent to a terminal, where the indication information indicates that all first-type terminals are allowed to access a network, or the indication information indicates that all first-type terminals are not allowed to access a network. Illustratively, when the information field bearing the indication information indicates a first value, all first-type terminals are allowed to access a network; or when the information field bearing the indication information indicates the second value, all first-type terminals are not allowed to access a network. Here, not allowing all first-type terminals to access a network may be allowing only some first-type terminals to access a network. It should be noted that as long as the terminals are the first-type terminals, the terminals belong to those of "all first-type terminals" regardless of the number of Rx branches of the terminal and/or the number of antenna elements of the Rx branches.

Here, not allowing all first-type terminals to access a network may also be understood as prohibiting all first-type terminals from accessing the network.

In an embodiment, indication information is sent to a terminal, where the indication information indicates that some of first-type terminals are allowed to access a network, or the indication information indicates that some of first-type terminals are not allowed to access a network. Illustratively, when an information field bearing indication information indicates a first value, some first-type terminals are allowed to access a network; or when the information field bearing the indication information indicates the second value, some first-type terminals are not allowed to access a network. Here, some first-type terminals that are not allowed to access a network may be some first-type terminals that are not allowed to access a network with a predetermined feature. The predetermined feature may be the number of Rx branches of the first-type terminals and/or the number of antenna elements of the Rx branches. It should be noted that if the first-type terminals has the predetermined feature, the first-type terminals belongs to the terminals among "some first-type terminals".

Here, not allowing some first-type terminals to access a network may also be understood as prohibiting some first-type terminals to access a network.

In an embodiment, after receiving the indication information, any of the first-type terminals may be allowed to access a network if it is determined that the indication information indicates that all first-type terminals are allowed to access a network. or if it is determined that the indication information indicates that all first-type terminals are not allowed to access a network, any of the first-type terminals may determine whether there is a predetermined feature, the first-type terminals may be allowed to access a network if there is the predetermined feature and the indication information indicates that the first-type terminals having the predetermined feature are allowed to access a network, or the first-type terminals may not be allowed to access a network if there is the predetermined feature and the indication information indicates that the first-type terminals having the predetermined feature are not allowed to access a network.

In an embodiment, after receiving the indication information, any of the first-type terminals may determine whether it has a predetermined feature that some first-type terminals should have if it is determined that the indication information indicates that some first-type terminals are allowed to access a network, the first-type terminal may be allowed to access a network if it has the predetermined feature, or the first-type terminal may not be allowed to access a network if it has no predetermined feature.

In an embodiment, after receiving the indication information, if it is determined that the indication information indicates that some first-type terminals are not allowed to access a network, any of the first-type terminals may determine whether it has a predetermined feature that some first-type terminals should have, and if it has the predetermined feature, the first-type terminal may not be allowed to access a network, or if it has no predetermined feature, the first-type terminal may be allowed to access a network.

In an embodiment, the information fields of the indication information may be divided for different predetermined features, the different information fields corresponding to one of the predetermined features. For example, the information field is divided into a first information field for indicating whether the first-type terminals whose number of Rx branches is a first predetermined number are allowed to access a network and a second information field for indicating whether the first-type terminals of which the number of antenna elements of the Rx branches is a second predetermined number are allowed to access a network.

For example, if the value of the first information field is "1" and the value of the second information field is also "1", the first-type terminals of which the number of Rx branches is a first predetermined number and the number of antenna elements of the Rx branches is a second predetermined number are allowed to access a network. or if the value of the first information field is "1" and the value of the second information field is also "0", the first-type terminals of which the number of Rx branches is a first predetermined number and the number of antenna elements of the Rx branches is a second predetermined number are not allowed to access a network.

In an embodiment, indication information is sent to a terminal based on the system message, where the indication information indicates whether all first-type terminals are allowed to access a network or the indication information indicates whether some first-type terminals are allowed to access a network.

In an embodiment of the present disclosure, indication information is sent to a terminal, where the indication information indicates whether all first-type terminals are allowed to access a network, or the indication information indicates whether some first-type terminals are allowed to access a network. As such, since the indication information sent by the access network device to the terminal indicates: whether all first-type terminals are allowed to access a network, or whether some first-type terminals are allowed to access a network. After the terminal receives the indication information, it can be determined whether to access a network according to the indication of the indication information, and the reliability of the first-type terminal accessing the network can be improved compared to when the first-type terminal can access a network cannot be clearly determined.

It should be noted that a person skilled in the art can understand that the method provided in embodiments of the present disclosure can be performed alone or together with some methods in embodiments of the present disclosure or some methods in the related art.

In an embodiment, indication information indicates whether the first-type terminals having a predetermined feature are allowed to access a network.

In an embodiment, the predetermined feature includes at least one of: a number of Rx branches; a structure of an antenna; a number of multiple-input multiple-output (MIMO) layers supportable at most; and a transmission power level.

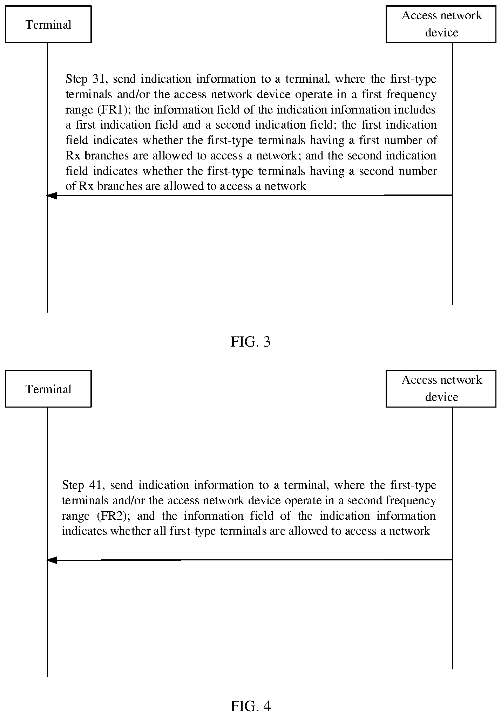

As shown in FIG. 3, an access control method is provided in embodiments of the present disclosure, where the method is performed by an access network device, and the method includes:
Step 31, send indication information to a terminal, where the first-type terminals and/or the access network device operate in a first frequency range (FR1); the information field of the indication information includes a first indication field and a second indication field; the first indication field indicates whether the first-type terminals having a first number of Rx branches are allowed to access a network; and the second indication field indicates whether the first-type terminals having a second number of Rx branches are allowed to access a network.

In an embodiment, indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are allowed to access a network; and the second indication field indicates whether the first-type terminals having a second number of Rx branches are allowed to access a network. Here, if there are only two kinds of first-type terminals, i.e., the first-type terminals having the first number of Rx branches and the first-type terminals having the second number of Rx branches, the present embodiment essentially allows all first-type terminals to access a network.

In an embodiment, indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are allowed to access a network; and the second indication field indicates whether the first-type terminals having a second number of Rx branches are not allowed to access a network. The essence of the present embodiment is that only some first-type terminals are allowed to access a network.

In an embodiment, indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are not allowed to access a network; and the second indication field indicates whether the first-type terminals having a second number of Rx branches are allowed to access a network. The essence of the present embodiment is that only some first-type terminals are allowed to access a network.

In an embodiment, indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are not allowed to access a network; and the second indication field indicates whether the first-type terminals having a second number of Rx branches are not allowed to access a network. Here, if there are only two kinds of first-type terminals, i.e., the first-type terminals having the first number of Rx branches and the first-type terminals having the second number of Rx branches, the essence of the present embodiment is that all first-type terminals are not allowed to access a network.

In an embodiment, the first-type terminals having a first number of Rx branches are allowed to access a network in response to the first indication field taking a first value, or the first-type terminals having a first number of Rx branches are not allowed to access a network in response to the first indication field taking a second value.

In an embodiment, the first-type terminals having a second number of Rx branches are allowed to access a network in response to the second indication field taking a first value, or the first-type terminals having a second number of Rx branches are not allowed to access a network in response to the second indication field taking a second value.

The first indication field and the second indication field may respectively correspond to 1 bit. The first number may be 1 and the second number may be 2.

It should be noted that a person skilled in the art can understand that the method provided in embodiments of the present disclosure can be performed alone or together with some methods in embodiments of the present disclosure or some methods in the related art.

As shown in FIG. 4, an access control method is provided in embodiments of the present disclosure, where the method is performed by an access network device, and the method includes:
Step 41, send indication information to a terminal, where the first-type terminals and/or the access network device operate in a second frequency range (FR2); and the information field of the indication information indicates whether all first-type terminals are allowed to access a network.

In an embodiment, all first-type terminals are allowed to access a network, i.e., any of the first-type terminals can access a network, in response to the information field taking a first value, or no first-type terminal is allowed to access a network, i.e., no first-type terminal can access a network, in response to the information field taking a second value.

It should be noted that a person skilled in the art can understand that the method provided in embodiments of the present disclosure can be performed alone or together with some methods in embodiments of the present disclosure or some methods in the related art.

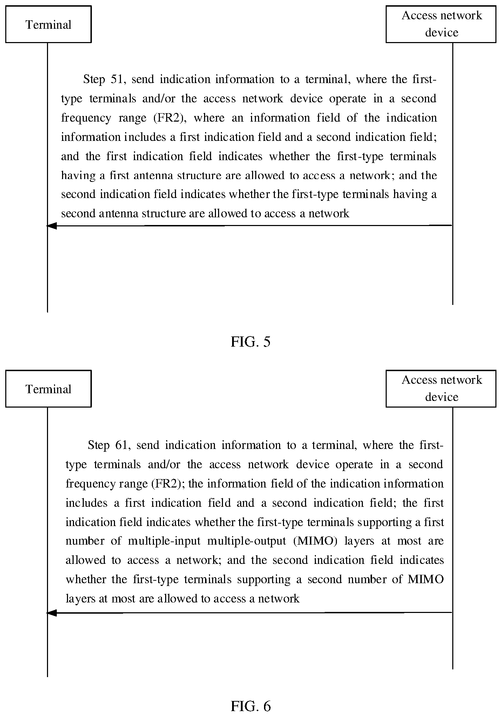

As shown in FIG. 5, an access control method is provided in embodiments of the present disclosure, where the method is performed by an access network device, and the method includes:
Step 51, send indication information to a terminal, where the first-type terminals and/or the access network device operate in a second frequency range (FR2), where an information field of the indication information includes a first indication field and a second indication field; and the first indication field indicates whether the first-type terminals having a first antenna structure are allowed to access a network; and the second indication field indicates whether the first-type terminals having a second antenna structure are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals having a first antenna structure are allowed to access a network; and the second indication field indicates that the first-type terminals having a second antenna structure are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals having a first antenna structure are allowed to access a network; and the second indication field indicates that the first-type terminals having the second antenna structure are not allowed to access a network.

In an embodiment, indication information is sent to a terminal, where the first-type terminals and/or the access network device operate in a second frequency range (FR2), where an information field of the indication information includes a first indication field and a second indication field; and the first indication field indicates that the first-type terminals having a first antenna structure are not allowed to access a network; and the second indication field indicates that the first-type terminals having a second antenna structure are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals having a first antenna structure are not allowed to access a network; and the second indication field indicates that the first-type terminals having a second antenna structure are not allowed to access a network.

In an embodiment, the first antenna structure includes the same number of antenna elements as that of an antenna of a second-type terminal.

In an embodiment, the second antenna structure includes a smaller number of antenna elements than that of an antenna of a second-type terminal.

It should be noted that a person skilled in the art can understand that the method provided in embodiments of the present disclosure can be performed alone or together with some methods in embodiments of the present disclosure or some methods in the related art.

As shown in FIG. 6, an access control method is provided in embodiments of the present disclosure, where the method is performed by an access network device, and the method includes:
Step 61, send indication information to a terminal, where the first-type terminals and/or the access network device operate in a second frequency range (FR2); the information field of the indication information includes a first indication field and a second indication field; the first indication field indicates whether the first-type terminals supporting a first number of multiple-input multiple-output (MIMO) layers at most are allowed to access a network; and the second indication field indicates whether the first-type terminals supporting a second number of MIMO layers at most are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are allowed to access a network; the second indication field indicates that the first-type terminals supporting a second number of MIMO layers at most are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are allowed to access a network; the second indication field indicates that the first-type terminals supporting a second number of MIMO layers at most are not allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are not allowed to access a network; the second indication field indicates that the first-type terminals supporting a second number of MIMO layers at most are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are not allowed to access a network; the second indication field indicates that the first-type terminals supporting a second number of MIMO layers at most are not allowed to access a network.

The first number may be 1 and the second number may be 2.

It should be noted that a person skilled in the art can understand that the method provided in embodiments of the present disclosure can be performed alone or together with some methods in embodiments of the present disclosure or some methods in the related art.

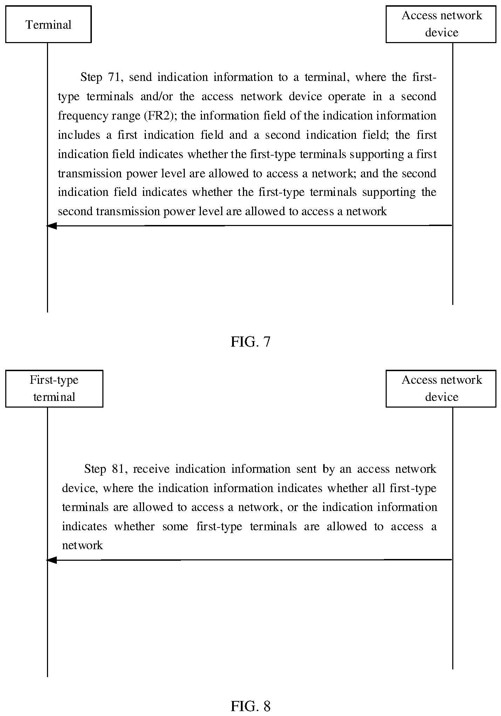

As shown in FIG. 7, an access control method is provided in embodiments of the present disclosure, where the method is performed by an access network device, and the method includes:
Step 71, send indication information to a terminal, where the first-type terminals and/or the access network device operate in a second frequency range (FR2); the information field of the indication information includes a first indication field and a second indication field; the first indication field indicates whether the first-type terminals supporting a first transmission power level are allowed to access a network; and the second indication field indicates whether the first-type terminals supporting the second transmission power level are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first transmission power level are allowed to access a network; and the second indication field indicates that the first-type terminals supporting the second transmission power level are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first transmission power level are allowed to access a network; and the second indication field indicates that the first-type terminals supporting the second transmission power level are not allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first transmission power level are not allowed to access a network; and the second indication field indicates that the first-type terminals supporting the second transmission power level are allowed to access a network.

In an embodiment, indication information is sent to a terminal, where the first-type terminals and/or the access network device operate in a second frequency range (FR2); the information field of the indication information includes a first indication field and a second indication field; the first indication field indicates that the first-type terminals supporting a first transmission power level are not allowed to access a network; and the second indication field indicates that the first-type terminals supporting the second transmission power level are not allowed to access a network.

In an embodiment, the first transmission power level includes a first power level element and the second transmission power level includes a second power level element, and the transmission power corresponding to the second power level element is less than the transmission power corresponding to the first power level element.

In an embodiment, the first transmission power level includes a plurality of first power level elements and the second transmission power level also includes a plurality of second power level elements. The transmission power corresponding to the first power level element in the second transmission power level is lower than the transmission power corresponding to the first power level element in the first transmission power level. For example, the first transmission power level includes three first power level elements of P1, P3 and P5, and the second transmission power level includes second power level elements of P1-delta1, P3-delta3, and P5-delta5, where P1, P3, P5, delta 1, delta3, and delta5 are numbers greater than 0.

In an embodiment, the first-type terminals supporting the first transmission power level have a first antenna structure and/or the first-type terminals supporting the second transmission power level have a second antenna structure.

In an embodiment, the first antenna structure includes the same number of antenna elements as that of an antenna of a second-type terminal and/or the second antenna structure includes a smaller number of antenna elements than that of an antenna of a second-type terminal.

It should be noted that a person skilled in the art can understand that the method provided in embodiments of the present disclosure can be performed alone or together with some methods in embodiments of the present disclosure or some methods in the related art.

As shown in FIG. 8, an access control method is provided in embodiments of the present disclosure, where the method is performed by a first-type terminal, and the method includes:
Step 81, receive indication information sent by an access network device, where the indication information indicates whether all first-type terminals are allowed to access a network, or the indication information indicates whether some first-type terminals are allowed to access a network.

Here, the first-type terminals to which the present disclosure relates may be, but are not limited to, a mobile phone, a wearable device, a vehicle-mounted terminal, a Road Side Unit (RSU), a smart home terminal, an industrial sensing device and/or a medical device, etc. In some embodiments, the first-type terminal may be a RedCap user equipment or a predetermined version of a new radio NR terminal (e.g., an NR terminal of R17). The second-type terminals in the present disclosure may be terminals of R16 and R17.

The access network device referred to in the present disclosure may be a base station. Here, the base station may be various types of base stations, for example, a base station of a third-generation mobile communication (3G) network, a base station of a fourth-generation mobile communication (4G) network, a base station of a fifth-generation mobile communication (5G) network, or other evolved type base stations.

In an embodiment, the first-type terminal may be provided with a different number of Rx branches. Illustratively, the first-type terminal may be provided with 1 or 2 Rx branches.

In an embodiment, the Rx branches of the first-type terminals may be provided with a different number of antenna elements. Illustratively, the Rx branches of the first-type terminals may be provided with 3 or 4 antenna elements.

In some embodiments, some first-type terminals may be first-type terminals having the same number of Rx branches. Some first-type terminals may also be first-type terminals all having the same Rx branches and the same number of antenna elements of the Rx branches.

In an embodiment, indication information sent by an access network device is received, where the indication information indicates that all first-type terminals are allowed to access a network, or the indication information indicates that all first-type terminals are not allowed to access a network. Illustratively, when the information field bearing the indication information indicates a first value, all first-type terminals are allowed to access a network; or when the information field bearing the indication information indicates the second value, all first-type terminals are not allowed to access a network. Here, not allowing all first-type terminals to access a network may be allowing only some first-type terminals to access a network. It should be noted that as long as the terminals are the first-type terminals, the terminals belong to those of "all first-type terminals" regardless of the number of Rx branches of the terminal and/or the number of antenna elements of the Rx branches.

Here, not allowing all first-type terminals to access a network may also be understood as prohibiting all first-type terminals from accessing the network.

In an embodiment, in response to the indication information indicating that all first-type terminals are allowed to access a network, the first-type terminals access the network; or in response to the indication information indicating that all first-type terminals are not allowed to access a network, the first-type terminals do not access the network.

In an embodiment, indication information sent by an access network device is received, where the indication information indicates that some of first-type terminals are allowed to access a network, or the indication information indicates that some of first-type terminals are not allowed to access a network. Illustratively, when an information field bearing indication information indicates a first value, some first-type terminals are allowed to access a network; or when the information field bearing the indication information indicates the second value, some first-type terminals are not allowed to access a network. Here, some first-type terminals that are not allowed to access a network may be some first-type terminals that are not allowed to access a network with a predetermined feature. The predetermined feature may be the number of Rx branches of the first-type terminals and/or the number of antenna elements of the Rx branches. It should be noted that if the first-type terminals has the predetermined feature, the first-type terminals belongs to the terminals among "some first-type terminals".

Here, not allowing some first-type terminals to access a network may also be understood as prohibiting some first-type terminals to access a network.

In an embodiment, in response to the indication information indicating that some first-type terminals are allowed to access a network, the first-type terminals determine whether to access a network according to a determination result of whether to belong to some first-type terminals; if the first-type terminals belong to some first-type terminals, the first-type terminals access a network; or in response to the indication information indicating that some first-type terminals are not allowed to access a network, the first-type terminals determine whether to access a network according to a determination result of whether to belong to some first-type terminals; if the first-type terminals belong to some first-type terminals, the first-type terminals do not access a network.

In an embodiment, after receiving the indication information, any of the first-type terminals may be allowed to access a network if it is determined that the indication information indicates that all first-type terminals are allowed to access a network. or if it is determined that the indication information indicates that all first-type terminals are not allowed to access a network, any of the first-type terminals may determine whether there is a predetermined feature, the first-type terminals may be allowed to access a network if there is the predetermined feature and the indication information indicates that the first-type terminals having the predetermined feature are allowed to access a network, or the first-type terminals may not be allowed to access a network if there is the predetermined feature and the indication information indicates that the first-type terminals having the predetermined feature are not allowed to access a network.

In an embodiment, after receiving the indication information, any of the first-type terminals may determine whether it has a predetermined feature that some first-type terminals should have if it is determined that the indication information indicates that some first-type terminals are allowed to access a network, the first-type terminal may be allowed to access a network if it has the predetermined feature, or the first-type terminal may not be allowed to access a network if it has no predetermined feature.

In an embodiment, after receiving the indication information, if it is determined that the indication information indicates that some first-type terminals are not allowed to access a network, any of the first-type terminals may determine whether it has a predetermined feature that some first-type terminals should have, and if it has the predetermined feature, the first-type terminal may not be allowed to access a network, or if it has no predetermined feature, the first-type terminal may be allowed to access a network.

It should be noted that the predetermined feature may be the number of Rx branches of the first-type terminals, the structure of the antenna and/or the transmission power of the antenna, etc.

In an embodiment, the information fields of the indication information may be divided for different predetermined features, the different information fields corresponding to one of the predetermined features. For example, the information field is divided into a first information field for indicating whether the first-type terminals whose number of Rx branches is a first predetermined number are allowed to access a network and a second information field for indicating whether the first-type terminals of which the number of antenna elements of the Rx branches is a second predetermined number are allowed to access a network.

For example, if the value of the first information field is "1" and the value of the second information field is also "1", the first-type terminals of which the number of Rx branches is a first predetermined number and the number of antenna elements of the Rx branches is a second predetermined number are allowed to access a network. or if the value of the first information field is "1" and the value of the second information field is also "0", the first-type terminals of which the number of Rx branches is a first predetermined number and the number of antenna elements of the Rx branches is a second predetermined number are not allowed to access a network.

In an embodiment, indication information sent by an access network device to a terminal is received through a system message, where the indication information indicates whether all first-type terminals are allowed to access a network or the indication information indicates whether some first-type terminals are allowed to access a network.

It should be noted that a person skilled in the art can understand that the method provided in embodiments of the present disclosure can be performed alone or together with some methods in embodiments of the present disclosure or some methods in the related art.

In an embodiment, the indication information indicates whether the first-type terminals having a predetermined feature are allowed to access a network; the predetermined feature includes at least one of: a number of Rx branches; a structure of an antenna; a number of multiple-input multiple-output (MIMO) layers supportable at most; and a transmission power level.

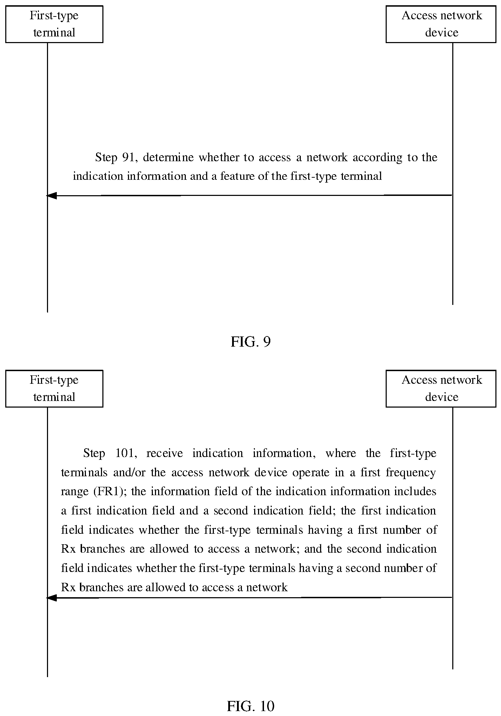

As shown in FIG. 9, an access control method is provided in embodiments of the present disclosure, where the method is performed by a first-type terminal, and the method includes:
Step 91, determine whether to access a network according to the indication information and a feature of the first-type terminal.

In an embodiment, indication information indicates that all first-type terminals are allowed to access a network, or the indication information indicates that some first-type terminals are allowed to access a network.

In an embodiment, the indication information may be used for indicating whether the first-type terminals having a predetermined feature are allowed to access a network.

In an embodiment, the predetermined feature may be the number of Rx branches of the first-type terminals, the structure of the antenna and/or the transmission power of the antenna, etc.

In an embodiment, it is determined whether the first-type terminal is a terminal having a predetermined feature according to the indication information and the feature of the first-type terminal; it is determined that the indication information indicates that: the first-type terminals having a predetermined feature are allowed to access a network, and it is determined that the first-type terminal is a terminal having the predetermined feature, it is determined to access the network.

In an embodiment, it is determined whether the first-type terminal is a terminal having a predetermined feature according to the indication information and the feature of the first-type terminal; it is determined that the indication information indicates that: the first-type terminals having the predetermined feature are allowed to access a network, and it is determined that the first-type terminal is not a terminal having the predetermined feature, it is determined to not access the network.

In an embodiment, it is determined whether the first-type terminal is a terminal having a predetermined feature according to the indication information and the feature of the first-type terminal; it is determined that the indication information indicates that: the first-type terminals having the predetermined feature are not allowed to access a network, and it is determined that the first-type terminal is a terminal having the predetermined feature, it is determined to not access the network.

In an embodiment, it is determined whether the first-type terminal is a terminal having a predetermined feature according to the indication information and the feature of the first-type terminal; it is determined that the indication information indicates that: the first-type terminals having the predetermined feature are not allowed to access a network, and it is determined that the first-type terminal is not a terminal having the predetermined feature, it is determined to access the network.

It should be noted that a person skilled in the art can understand that the method provided in embodiments of the present disclosure can be performed alone or together with some methods in embodiments of the present disclosure or some methods in the related art.

As shown in FIG. 10, an access control method is provided in embodiments of the present disclosure, where the method is performed by a first-type terminal, and the method includes:
Step 101, receive indication information, where the first-type terminals and/or the access network device operate in a first frequency range (FR1); the information field of the indication information includes a first indication field and a second indication field; the first indication field indicates whether the first-type terminals having a first number of Rx branches are allowed to access a network; and the second indication field indicates whether the first-type terminals having a second number of Rx branches are allowed to access a network.

In an embodiment, the indication information sent by an access network device is received, where the first-type terminals and/or the access network device operate in a first frequency range (FR1); the information field of the indication information includes a first indication field and a second indication field; the first indication field indicates whether the first-type terminals having a first number of Rx branches are allowed to access a network; and the second indication field indicates whether the first-type terminals having a second number of Rx branches are allowed to access a network. Here, if there are only two kinds of first-type terminals, i.e., the first-type terminals having the first number of Rx branches and the first-type terminals having the second number of Rx branches, the present embodiment essentially allows all first-type terminals to access a network. After receiving the indication information, if the first-type terminal is a terminal having the first number of Rx branches, the first-type terminal accesses a network; or after receiving the indication information, if the first-type terminal is a terminal having the second number of Rx branches, the first-type terminal accesses a network.

In an embodiment, the indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are allowed to access a network; and the second indication field indicates whether the first-type terminals having a second number of Rx branches are not allowed to access a network. The essence of the present embodiment is that only some first-type terminals are allowed to access a network. After receiving the indication information, if the first-type terminal is a terminal having the first number of Rx branches, the first-type terminal accesses a network; or after receiving the indication information, if the first-type terminal is a terminal having the second number of Rx branches, the first-type terminal does not access a network.

In an embodiment, the indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are not allowed to access a network; and the second indication field indicates whether the first-type terminals having a second number of Rx branches are allowed to access a network. The essence of the present embodiment is that only some first-type terminals are allowed to access a network. After receiving the indication information, if the first-type terminal is a terminal having a first number of Rx branches, the first-type terminal does not access a network; or after receiving the indication information, if the first-type terminal is a terminal having a second number of Rx branches, the first-type terminal accesses a network.

In an embodiment, indication information is sent to a terminal, where the first-type terminals and/or the access network device operate in a first frequency range (FR1); the information field of the indication information includes a first indication field and a second indication field; the first indication field indicates whether the first-type terminals having a first number of Rx branches are not allowed to access a network; and the second indication field indicates whether the first-type terminals having a second number of Rx branches are not allowed to access a network. Here, if there are only two kinds of first-type terminals, i.e., the first-type terminals having the first number of Rx branches and the first-type terminals having the second number of Rx branches, the essence of the present embodiment is that all first-type terminals are not allowed to access a network. After receiving the indication information, if the first-type terminal is a terminal having a first number of Rx branches, the first-type terminal does not access a network; or after receiving the indication information, if the first-type terminal is a terminal having a second number of Rx branches, the first-type terminal does not access a network.

In an embodiment, the first-type terminals having a first number of Rx branches are allowed to access a network in response to the first indication field taking a first value, or the first-type terminals having a first number of Rx branches are not allowed to access a network in response to the first indication field taking a second value.

In an embodiment, the first-type terminals having a second number of Rx branches are allowed to access a network in response to the second indication field taking a first value, or the first-type terminals having a second number of Rx branches are not allowed to access a network in response to the second indication field taking a second value.

The first indication field and the second indication field may respectively correspond to 1 bit. The first number may be 1 and the second number may be 2.

It should be noted that a person skilled in the art can understand that the method provided in embodiments of the present disclosure can be performed alone or together with some methods in embodiments of the present disclosure or some methods in the related art.

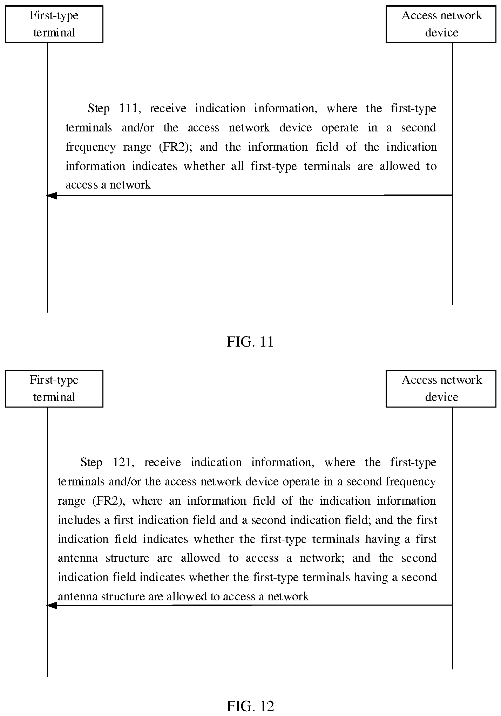

As shown in FIG. 11, an access control method is provided in embodiments of the present disclosure, where the method is performed by a first-type terminal, and the method includes:
Step 111, receive indication information, where the first-type terminals and/or the access network device operate in a second frequency range (FR2); and the information field of the indication information indicates whether all first-type terminals are allowed to access a network.

In an embodiment, indication information sent by an access network device is received, and the first-type terminals and/or the access network device operate in a second frequency range (FR2); and the information field of the indication information indicates that all first-type terminals are allowed to access a network. The first-type terminals access the network after receiving the indication information.

In an embodiment, indication information sent by an access network device is received, and the first-type terminals and/or the access network device operate in a second frequency range (FR2); and the information field of the indication information indicates that all first-type terminals are not allowed to access a network. The first-type terminals do not access a network after receiving the indication information.

It should be noted that a person skilled in the art can understand that the method provided in embodiments of the present disclosure can be performed alone or together with some methods in embodiments of the present disclosure or some methods in the related art.

As shown in FIG. 12, an access control method is provided in embodiments of the present disclosure, where the method is performed by a first-type terminal, and the method includes:
Step 121, receive indication information, where the first-type terminals and/or the access network device operate in a second frequency range (FR2), where an information field of the indication information includes a first indication field and a second indication field; and the first indication field indicates whether the first-type terminals having a first antenna structure are allowed to access a network; and the second indication field indicates whether the first-type terminals having a second antenna structure are allowed to access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals having a first antenna structure are allowed to access a network; and the second indication field indicates that the first-type terminals having a second antenna structure are allowed to access a network. After receiving the indication information, if the first-type terminal is a terminal having a first antenna structure, the first-type terminal accesses a network; or after receiving the indication information, if the first-type terminal is a terminal having a second antenna structure, the first-type terminal accesses a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals having a first antenna structure are allowed to access a network; and the second indication field indicates that the first-type terminals having a second antenna structure are not allowed to access a network. After receiving the indication information, if the first-type terminal is a terminal having a first antenna structure, the first-type terminal accesses a network; or after receiving the indication information, if the first-type terminal is a terminal having a second antenna structure, the first-type terminal does not access the network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals having a first antenna structure are not allowed to access a network; and the second indication field indicates that the first-type terminals having a second antenna structure are allowed to access a network. After receiving the indication information, if the first-type terminal is a terminal having a first antenna structure, the first-type terminal does not access a network; or after receiving the indication information, if the first-type terminal is a terminal having a second antenna structure, the first-type terminal accesses the network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals having a first antenna structure are not allowed to access a network; and the second indication field indicates that the first-type terminals having a second antenna structure are not allowed to access a network. After receiving the indication information, if the first-type terminal is a terminal having a first antenna structure, the first-type terminal does not access a network; or after receiving the indication information, if the first-type terminal is a terminal having a second antenna structure, the first-type terminal does not access the network.

In an embodiment, the first antenna structure includes the same number of antenna elements as that of an antenna of a second-type terminal.

In an embodiment, the second antenna structure includes a smaller number of antenna elements than that of an antenna of a second-type terminal.

It should be noted that a person skilled in the art can understand that the method provided in embodiments of the present disclosure can be performed alone or together with some methods in embodiments of the present disclosure or some methods in the related art.

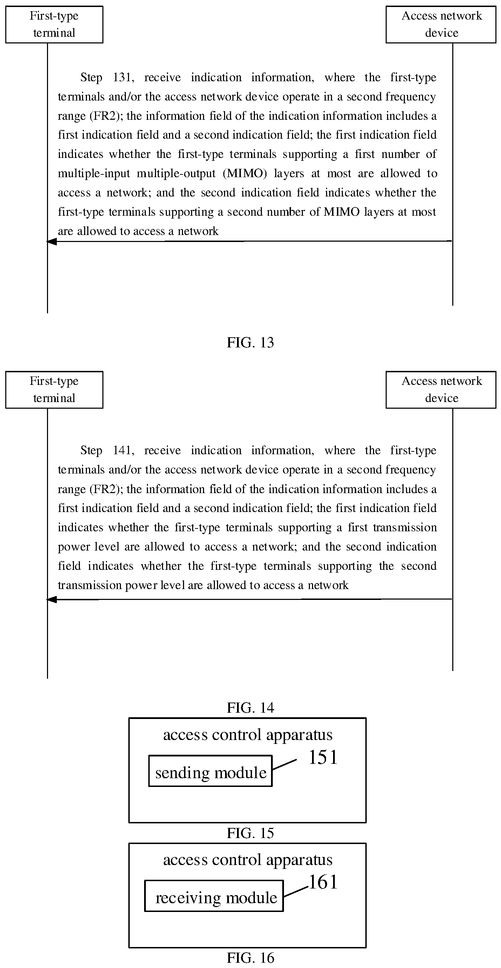

As shown in FIG. 13, an access control method is provided in embodiments of the present disclosure, where the method is performed by a first-type terminal, and the method includes:
Step 131, send indication information to a terminal, where the first-type terminals and/or the access network device operate in a second frequency range (FR2); the information field of the indication information includes a first indication field and a second indication field; the first indication field indicates whether the first-type terminals supporting a first number of multiple-input multiple-output (MIMO) layers at most are allowed to access a network; and the second indication field indicates whether the first-type terminals supporting a second number of MIMO layers at most are allowed to access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are allowed to access a network; the second indication field indicates that the first-type terminals supporting a second number of MIMO layers at most are allowed to access a network. After receiving the indication information, if the first-type terminals allow support of a first number of MIMO layers at most, the first-type terminals access a network; or if the first-type terminals allow support of a second number of MIMO layers at most, the first-type terminals access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are allowed to access a network; the second indication field indicates that the first-type terminals supporting a second number of MIMO layers at most are not allowed to access a network. After receiving the indication information, if the first-type terminals allow support of a first number of MIMO layers at most, the first-type terminals access a network; or if the first-type terminals allow support of a second number of MIMO layers at most, the first-type terminals do not access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are not allowed to access a network; the second indication field indicates that the first-type terminals supporting a second number of MIMO layers at most are allowed to access a network. After receiving the indication information, if the first-type terminals allow support of a first number of MIMO layers at most, the first-type terminals do not access a network; or if the first-type terminals allow support of a second number of MIMO layers at most, the first-type terminals access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first number of multiple-input multiple-output (MIMO) layers at most are not allowed to access a network; the second indication field indicates that the first-type terminals supporting a second number of MIMO layers at most are not allowed to access a network. After receiving the indication information, if the first-type terminals allow support of a first number of MIMO layers at most, the first-type terminals do not access a network; or if the first-type terminals allow support of a second number of MIMO layers at most, the first-type terminals do not access a network.

The first number may be 1 and the second number may be 2.

It should be noted that a person skilled in the art can understand that the method provided in embodiments of the present disclosure can be performed alone or together with some methods in embodiments of the present disclosure or some methods in the related art.

As shown in FIG. 14, an access control method is provided in embodiments of the present disclosure, where the method is performed by a first-type terminal, and the method includes:
Step 141, receive indication information, where the first-type terminals and/or the access network device operate in a second frequency range (FR2); the information field of the indication information includes a first indication field and a second indication field; the first indication field indicates whether the first-type terminals supporting a first transmission power level are allowed to access a network; and the second indication field indicates whether the first-type terminals supporting the second transmission power level are allowed to access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first transmission power level are allowed to access a network; and the second indication field indicates that the first-type terminals supporting the second transmission power level are allowed to access a network. After receiving the indication information, if the first-type terminals support the first transmission power level, the first-type terminals access a network, or after receiving the indication information, if the first-type terminals support the second transmission power level, the first-type terminals access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first transmission power level are allowed to access a network; and the second indication field indicates that the first-type terminals supporting the second transmission power level are not allowed to access a network. After receiving the indication information, if the first-type terminals support the first transmission power level, the first-type terminals access a network, or after receiving the indication information, if the first-type terminals support the second transmission power level, the first-type terminals do not access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first transmission power level are not allowed to access a network; and the second indication field indicates that the first-type terminals supporting the second transmission power level are allowed to access a network. After receiving the indication information, if the first-type terminals support the first transmission power level, the first-type terminals do not access a network, or after receiving the indication information, if the first-type terminals support the second transmission power level, the first-type terminals access a network.

In an embodiment, indication information sent by an access network device is received, where the first-type terminals and/or the access network device operate in a second frequency range (FR2); the information field of the indication information includes a first indication field and a second indication field; the first indication field indicates that the first-type terminals supporting a first transmission power level are not allowed to access a network; and the second indication field indicates that the first-type terminals supporting the second transmission power level are not allowed to access a network. After receiving the indication information, if the first-type terminals support the first transmission power level, the first-type terminals do not access a network, or after receiving the indication information, if the first-type terminals support the second transmission power level, the first-type terminals do not access a network.

In an embodiment, the first transmission power level includes a first power level element and the second transmission power level includes a second power level element, and the transmission power corresponding to the second power level element is less than the transmission power corresponding to the first power level element.

In an embodiment, the first transmission power level includes a plurality of first power level elements and the second transmission power level also includes a plurality of second power level elements. The transmission power corresponding to the second power level element is lower than the transmission power corresponding to the first power level element. For example, the first transmission power level includes three first power level elements of P1, P3 and P5, and the second transmission power level includes second power level elements of P1-delta1, P3-delta3, and P5-delta5.

In an embodiment, the first-type terminals supporting the first transmission power level have a first antenna structure and/or the first-type terminals supporting the second transmission power level have a second antenna structure.

In an embodiment, the first antenna structure includes the same number of antenna elements as that of an antenna of a second-type terminal and/or the second antenna structure includes a smaller number of antenna elements than that of an antenna of a second-type terminal.

It should be noted that a person skilled in the art can understand that the method provided in embodiments of the present disclosure can be performed alone or together with some methods in embodiments of the present disclosure or some methods in the related art.

As shown in FIG. 15, an access control apparatus is provided in an embodiment of the present disclosure, where the apparatus includes: a sending module 151 configured to send indication information to a terminal, where the indication information indicates whether all first-type terminals are allowed to access a network, or the indication information indicates whether some first-type terminals are allowed to access a network.

It should be noted that a person skilled in the art can understand that the method provided in embodiments of the present disclosure can be performed alone or together with some methods in embodiments of the present disclosure or some methods in the related art.

As shown in FIG. 16, an access control apparatus is provided in an embodiment of the present disclosure, where the apparatus includes: a receiving module 161 configured to receive indication information sent by an access network device, where the indication information indicates whether all first-type terminals are allowed to access a network, or the indication information indicates whether some first-type terminals are allowed to access a network.

It should be noted that those skilled in the art can understand that the method provided in embodiments of the present disclosure can be executed alone or together with some methods in embodiments of the present disclosure or some methods in the related art.

The disclosed embodiments provide a communication device including: a processor; a memory for storing processor-executable instructions. The processor is configured to implement the method as applied to any embodiment of the present disclosure when running executable instructions.

The processor may include, among other things, various types of storage media that are non-transitory computer storage media capable of continuing to remember the information stored thereon after the communication device is powered down.

The processor may be coupled to the memory via a bus or the like for reading executable programs stored on the memory.

Embodiments of the disclosure also provide a computer storage medium. The computer storage medium has stored therein computer executable instructions which, when executed by a processor, cause the method of any embodiment of the present disclosure to be performed.

With respect to the apparatus in the above-described embodiments, the specific manner in which the various modules execute operations has been described in detail in connection with the embodiments of the method and will not be described in detail herein.

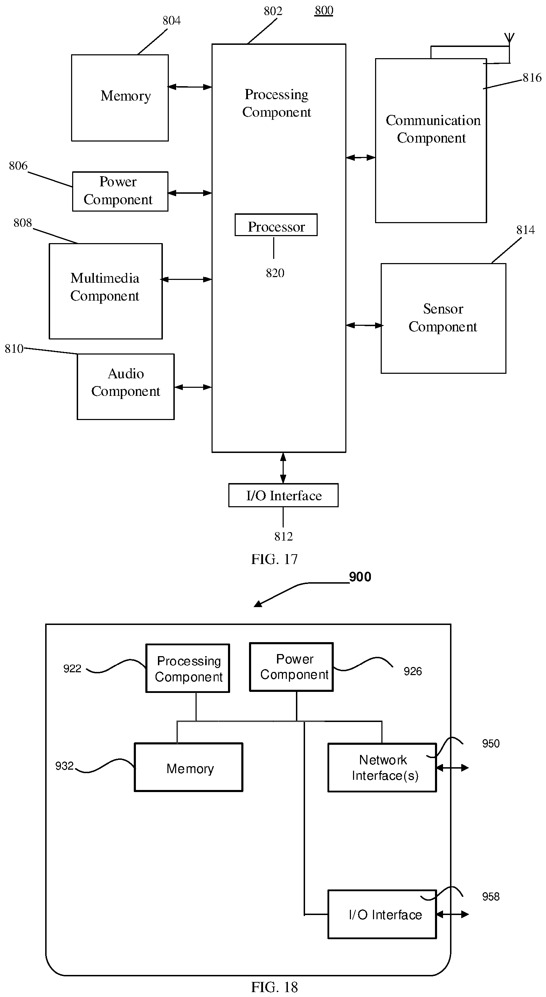

As shown in FIG. 17, an embodiment of the present disclosure provides a structure of a terminal.

Referring to the terminal 800 shown in FIG. 17, the present embodiment provides a terminal 800, which may specifically be a mobile phone, a computer, a digital broadcasting terminal, a messaging device, a game console, a tablet device, a medical device, an exercise device, a personal digital assistant, etc.

Referring to FIG. 17, a terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of terminal 800, such as operations associated with display, telephone calls, data communications, camera operations, and recording operations. The processing component 802 can include one or more processors 820 to execute instructions to execute all or part of the steps of the methods described above. In addition, the processing component 802 can include one or more modules to facilitate interaction between the processing component 802 and other components. For example, the processing component 802 can include a multimedia module to facilitate interaction between the multimedia component 808 and the processing component 802.

Memory 804 is configured to store various types of data to support operation at equipment 800. Examples of such data include instructions for any application or method operating on the terminal 800, contact data, phonebook data, messages, pictures, videos, etc. Memory 804 may be implemented by any type or combination of volatile or non-volatile memory devices, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disks.

Power component 806 provides power to the various components of terminal 800. The power components 806 can include a power management system, one or more power supplies, and other components associated with generating, managing, and distributing power for terminal 800.

The multimedia component 808 includes a screen that provides an output interface between the terminal 800 and a user. In some embodiments, the screen may include a liquid crystal display (LCD) and a touch panel (TP). If the screen comprises a touch panel, the screen may be implemented as a touch screen to receive input signals from a user. The touch panel includes one or more touch sensors to sense touches, slides, and gestures on the touch panel. Touch sensors may not only sense the boundaries of a touch or slide action but also detect the duration and pressure associated with the touch or slide operation. In some embodiments, the multimedia component 808 includes a front camera and/or a rear camera. When the equipment 800 is in an operational mode, such as a camera mode or a video mode, the front camera and/or the rear camera may receive external multimedia data. Each of the front camera and the rear camera may be a fixed optical lens system or have a focal length and an optical zoom capability.

The audio component 810 is configured to output and/or input audio signals. For example, the audio component 810 includes a MIC configured to receive external audio signals when the terminal 800 is in an operational mode, such as a call mode, a recording mode, and a voice recognition mode. The received audio signal may be further stored in memory 804 or sent via communication component 816. In some embodiments, the audio component 810 also includes a speaker for outputting audio signals.

The I/O interface 812 provides an interface between the processing component 802 and a peripheral interface module, which may be a keyboard, click wheel, button, etc. These buttons may include, but are not limited to: the home button, volume button, start button, and lock button.

The sensor component 814 includes one or more sensors for providing status assessments of various aspects of terminal 800. For example, sensor component 814 can detect an on/off state of the equipment 800, a relative location of components, such as a display and keypad of the terminal 800, the sensor component 814 can also detect a change in position of the terminal 800 or a component of the terminal 800, the presence or absence of user contact with the terminal 800, an orientation or acceleration/deceleration of the terminal 800, and a temperature change of the terminal 800. The sensor component 814 may include a proximity sensor configured to detect the presence of a nearby object in the absence of any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between terminal 800 and other equipment. The terminal 800 may access a wireless network based on a communication standard, such as Wi-Fi, 2G, or 3G, or a combination thereof. In an example embodiment, the communication component 816 receives broadcast signals or broadcast-related information from an external broadcast management system via a broadcast channel. In an example embodiment, the communication component 816 further includes a near-field communication (NFC) module to facilitate short-range communication. For example, the NFC module may be implemented based on RFID technology, IrDA technology, UWB technology, Bluetooth (BT) technology, and other technologies.

In an example embodiment, the terminal 800 may be implemented with one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic components for executing the methods described above.

In an example embodiment, there is also provided a non-transitory computer-readable storage medium comprising instructions, such as memory 804 comprising instructions, executable by the processor 820 of the terminal 800 to execute the method described above. For example, the non-transitory computer-readable storage medium may be an ROM, a random access memory (RAM), a CD-ROM, a magnetic tape, a floppy disk, an optical data storage equipment, etc.

As shown in FIG. 18, an embodiment of the present disclosure shows the structure of a base station. For example, base station 900 may be provided as network side equipment. Referring to FIG. 18, a base station 900 includes a processing component 922 that further includes one or more processors and memory resources represented by memory 932 for storing instructions, such as applications, executable by the processing component 922. An application stored in memory 932 may include one or more modules each corresponding to a set of instructions. Further, the processing component 922 is configured to execute instructions to execute any of the methods described above as applied to the base station.

The base station 900 can also include a power component 926 configured to execute power management of the base station 900, a wired or wireless network interface 950 configured to connect the base station 900 to a network, and an input-output (I/O) interface 958. Base station 900 may operate based on an operating system stored in memory 932, such as Windows Server TM, Mac OS XTM, UnixTM, LinuxTM, FreeBSDTM, or the like.

Other embodiments of the invention will be apparent to those skilled in the art from consideration of the specification and practice of the invention disclosed herein. This disclosure is intended to cover any variations, uses, or adaptations of the invention following, in general, the principles of the invention and including such departures from the present disclosure as come within known or customary practice in the art to which the invention pertains. It is intended that the specification and embodiments be considered exemplary only, with the true scope and spirit of the invention being indicated by the following claims.

It should be understood that the invention is not limited to the precise arrangements described above and shown in the accompanying drawings and that various modifications and changes may be made without departing from the scope thereof. The scope of the invention is only limited by the appended claims.

## Claims

1. An access control method, performed by an access network device, comprising:
sending indication information to a terminal, wherein the indication information indicates whether all first-type terminals are allowed to access a network, or the indication information indicates whether some first-type terminals are allowed to access a network.

2. The method according to claim 1, wherein the indication information further indicates whether the first-type terminals having a predetermined feature are allowed to access a network;
the predetermined feature comprises at least one of:
a number of Rx branches;
a structure of an antenna;
a number of multiple-input multiple-output (MIMO) layers supportable at most; and
a transmission power level.

3. The method according to claim 1, wherein an information field of the indication information comprises a first indication field and a second indication field;
the first-type terminals and/or the access network device operate in a first frequency range (FR1), the first indication field indicates whether the first-type terminals having a first number of Rx branches are allowed to access a network, and the second indication field indicates whether the first-type terminals having a second number of Rx branches are allowed to access a network; or
the first-type terminals and/or the access network device operate in a second frequency range (FR2), the first indication field indicates whether the first-type terminals having a first antenna structure are allowed to access a network, and the second indication field indicates whether the first-type terminals having a second antenna structure are allowed to access a network; or
the first-type terminals and/or the access network device operate in a second frequency range (FR2), the first indication field indicates whether the first-type terminals supporting a first number of MIMO layers at most are allowed to access a network, and the second indication field indicates whether the first-type terminals supporting a second number of MIMO layers at most are allowed to access a network; or
the first-type terminals and/or the access network device operate in a second frequency range (FR2), the first indication field indicates whether the first-type terminals supporting a first transmission power level are allowed to access a network, and the second indication field indicates whether the first-type terminals supporting a second transmission power level are allowed to access a network.

4. The method according to claim 1, wherein the first-type terminals and/or the access network device operate in a second frequency range (FR2); and an information field of the indication information indicates whether all first-type terminals are allowed to access a network.

5. The method according to claim 3, wherein the first transmission power level comprises a first power level element, the second transmission power level comprises a second power level element, and a transmission power corresponding to the second power level element is less than a transmission power corresponding to the first power level element.

6. The method according to claim 5, wherein the first-type terminals supporting the first transmission power level have the first antenna structure and/or the first-type terminals supporting the second transmission power level have the second antenna structure.

7. The method according to any one of claim 3 or 6, wherein the first antenna structure comprises the same number of antenna elements as that of an antenna of a second-type terminal, and/or the second antenna structure comprises a smaller number of antenna elements than that of an antenna of a second-type terminal.

8. The method according to claim 1, wherein the first-type terminal is a reduced capability (RedCap) user equipment.

9. An access control method, performed by a first-type terminal, comprising:
receiving indication information sent by an access network device, wherein the indication information indicates whether all first-type terminals are allowed to access a network, or the indication information indicates whether some first-type terminals are allowed to access a network.

10. The method according to claim 9, wherein the indication information further indicates whether the first-type terminals having a predetermined feature are allowed to access a network;
the predetermined feature comprises at least one of:
a number of Rx branches;
a structure of an antenna;
a number of multiple-input multiple-output (MIMO) layers supportable at most; and
a transmission power level.

11. The method according to claim 10, further comprising:
determining whether to access a network according to the indication information and a feature of the first-type terminal.

12. The method according to claim 11, wherein determining whether to access a network according to the indication information and the feature of the first-type terminal comprises:
determining whether the first-type terminal is a terminal having the predetermined feature according to the indication information and the feature of the first-type terminal;
determining that the indication information indicates that the first-type terminals having the predetermined feature are allowed to access a network, determining that the first-type terminal is a terminal having the predetermined feature, and determining to access a network; or
determining that the indication information indicates that the first-type terminals having the predetermined feature are allowed to access a network, determining that the first-type terminal is not a terminal having the predetermined feature, and determining not to access a network; or
determining that the indication information indicates that the first-type terminals having the predetermined feature are not allowed to access a network, determining that the first-type terminal is a terminal having the predetermined feature, and determining not to access a network; or
determining that the indication information indicates that the first-type terminals having the predetermined feature are not allowed to access a network, determining that the first-type terminal is not a terminal having the predetermined feature, and determining to access a network.

13. The method according to claim 9, wherein an information field of the indication information comprises a first indication field and a second indication field;
the first-type terminals and/or the access network device operate in a first frequency range (FR1), the first indication field indicates whether the first-type terminals having a first number of Rx branches are allowed to access a network, and the second indication field indicates whether the first-type terminals having a second number of Rx branches are allowed to access a network; or
the first-type terminals and/or the access network device operate in a second frequency range (FR2), an information field of the indication information comprises a first indication field and a second indication field; the first indication field indicates whether the first-type terminals having a first antenna structure are allowed to access a network; and the second indication field indicates whether the first-type terminals having a second antenna structure are allowed to access a network; or
the first-type terminals and/or the access network device operate in a second frequency range (FR2); an information field of the indication information comprises a first indication field and a second indication field; the first indication field indicates whether the first-type terminals supporting a first number of multiple-input multiple-output (MIMO) layers at most are allowed to access a network; and the second indication field indicates whether the first-type terminals supporting a second number of MIMO layers at most are allowed to access a network; or
the first-type terminals and/or the access network device operate in a second frequency range (FR2); an information field of the indication information comprises a first indication field and a second indication field; the first indication field indicates whether the first-type terminals supporting a first transmission power level are allowed to access a network; and the second indication field indicates whether the first-type terminals supporting a second transmission power level are allowed to access a network.

14. The method according to claim 9, wherein the first-type terminals and/or the access network device operate in a second frequency range (FR2); and an information field of the indication information indicates all first-type terminals are allowed or not allowed to access a network.

15. The method according to claim 13, wherein the first transmission power level comprises a first power level element, the second transmission power level comprises a second power level element, and a transmission power corresponding to the second power level element is less than a transmission power corresponding to the first power level element.

16. The method according to claim 15, wherein the first-type terminals supporting the first transmission power level have the first antenna structure, and/or the first-type terminals supporting the second transmission power level have the second antenna structure.

17. The method according to any one of claim 13 or 16, wherein the first antenna structure comprises the same number of antenna elements as that of an antenna of a second-type terminal, and/or the second antenna structure comprises a smaller number of antenna elements than that of an antenna of a second-type terminal.

18. The method according to claim 9, wherein the first-type terminal is a RedCap user equipment.

19. An access control apparatus, comprising:
a sending module configured to send indication information to a terminal, wherein the indication information indicates whether all first-type terminals are allowed to access a network, or the indication information indicates whether some first-type terminals are allowed to access a network.

20. An access control apparatus, comprising:
a receiving module configured to receive indication information sent by an access network device, wherein the indication information indicates whether all first-type terminals are allowed to access a network, or the indication information indicates whether some first-type terminals are allowed to access a network.

21. A communication device, comprising:
a memory;
a processor connected to the memory and configured to perform the method according to any one of claims 1 to 8 or 9 to 18 by executing computer-executable instructions stored on the memory.

22. A computer storage medium having stored therein computer executable instructions which, when executed by a processor, cause the method according to any one of claims 1 to 8 or 9 to 18 to be performed.
